# EUROPEAN PATENT APPLICATION

(11) **EP 4 826 469 A1**
(43) Date of publication of application: **21.10.2026**
(21) Application number: 26167192.9
(22) Date of filing: 24.03.2026
(51) Int. Cl.: G05B 13/02, B60W 20/12

(54) **FUNCTIONAL SAFETY AND EFFICIENCY ALGORITHM OPTIMIZATION**

(30) Priority: 15.04.2025 US 202519179384
(71) Applicant: NXP USA, Inc, Austin, TX 78735 (US)
(72) Inventor: Hillier, Curtis, 5656AG Eindhoven (NL); Taoudi, Amine, 5656AG Eindhoven (NL)
(74) Representative: Schwarzweller, Thomas

(57) **Abstract**

One example discloses a first cost optimization algorithm (algo#1) configured to generate a first set of control outputs that meet a cost objective at each of the time-steps based on each change of the set of input parameters; a second cost optimization algorithm (algo#2) configured to generate a second set of control outputs that meet the cost objective at each of the time-steps based on the set of input parameters; wherein the second device is configured to compare at each of the time-steps the first set of control outputs from the first optimization algorithm (algo#1) with the second set of control outputs from the second optimization algorithm (algo#2); and wherein the second device is configured to identify a set of differences between the first set of control outputs and the second set of control outputs.

## Description

The present specification relates to systems, methods, apparatuses, devices, articles of manufacture and instructions for algorithm optimization.

### SUMMARY

According to an example embodiment, an algorithm optimization system, comprising: a first device configured to, receive a set of input parameters over a predefined time period; wherein the predefined time period includes a set of time-steps and the set of input parameters change at each time-step; wherein the first device includes a first cost optimization algorithm (algo#1) configured to generate a first set of control outputs that meet a cost objective at each of the time-steps based on each change of the set of input parameters; a second device configured to, receive the set of input parameters after the predefined time period has ended and the set of input parameters have stopped changing; wherein the second device includes a second cost optimization algorithm (algo#2) configured to generate a second set of control outputs that meet the cost objective at each of the time-steps based on the set of input parameters; wherein the second device is configured to compare at each of the time-steps the first set of control outputs from the first optimization algorithm (algo#1) with the second set of control outputs from the second optimization algorithm (algo#2); and wherein the second device is configured to identify a set of differences between the first set of control outputs and the second set of control outputs.

In another example embodiment, the first device is configured to re-tune the first cost optimization algorithm (algo#1) based on the differences identified by the second cost optimization algorithm (algo#2).

In another example embodiment, the first device is configured to replace the first cost optimization algorithm (algo#1) with the second cost optimization algorithm (algo#2).

In another example embodiment, the second cost optimization algorithm (algo#2) performs optimization only after the first cost optimization algorithm (algo#1) has stopped receiving data.

In another example embodiment, further comprising a set of sensors configured to collect the set of input parameters.

In another example embodiment, the first cost optimization algorithm (algo#1) sequentially generates each control output in the first set of control outputs at each of the time steps as each input parameter in the set of input parameters is received.

In another example embodiment, the second cost optimization algorithm (algo#2) generates each control output in the second set of control outputs at each of the set of time steps after a complete set of the set of input parameters has been received.

In another example embodiment, the first cost optimization algorithm (algo#1) operates forward in time as each input parameter in the set of input parameters is received.

In another example embodiment, the second cost optimization algorithm (algo#2) operates backward in time after each input parameter in the set of input parameters has already been received.

In another example embodiment, the set of differences indicate an accuracy of the first cost optimization algorithm (algo#1).

In another example embodiment, the set of differences indicate a set of unknown events where the first cost optimization algorithm (algo#1) lacks a corresponding set of control actions.

In another example embodiment, the set of differences indicate portions of the first optimization algorithm (algo#1) that fall below a predefined quality metric.

In another example embodiment, the algorithm optimization system is a vehicle; and the predefined time period is a complete drive-cycle of the vehicle.

In another example embodiment, the first device is configured to re-tune a set of parameters in the first cost optimization algorithm (algo#1) based on the differences identified by the second cost optimization algorithm (algo#2) each time the complete drive-cycle is completed.

In another example embodiment, the first and second cost optimization algorithms (algo#1&2) are energy management system (EMS) algorithms.

In another example embodiment, the second cost optimization algorithm (algo#2) is a Dynamic Programming (DP) algorithm.

In another example embodiment, the cost objective is at least one of: an optimal range, an optimal component wear, or a device life-cycle.

In another example embodiment, the algorithm optimization system is at least one of a: vehicle, appliance, or industrial machine.

In another example embodiment, the vehicle is at least one of a: car, drone, plane, ship, or robot; or the appliance is at least one of a: refrigerator, a washer, a dryer, or a vehicle charger.

According to an example embodiment, an algorithm optimization method, comprising: receiving a set of input parameters over a predefined time period; wherein the predefined time period includes a set of time-steps and the set of input parameters change at each time-step; generating a first set of control outputs using a first cost optimization algorithm (algo#1) configured to meet a cost objective at each of the time-steps based on each change of the set of input parameters; generating a second set of control outputs using a second cost optimization algorithm (algo#2) configured to meet the cost objective at each of the time-steps based on the set of input parameters after the predefined time period has ended and the set of input parameters have stopped changing; comparing at each of the time-steps the first set of control outputs from the first optimization algorithm (algo#1) with the second set of control outputs from the second optimization algorithm (algo#2); and identifying a set of differences between the first set of control outputs and the second set of control outputs.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings.

### BRIEF DESCRIPTION OF THE DRAWINGS

Figure 1 represents a first example of an algorithm optimization system.
Figure 2 represents a second example of the algorithm optimization system.
Figure 3 represents a first example set of scoring results identifying the first cost optimization algorithm's (algo#1) ability to meet the cost objective compared to the second cost optimization algorithm's (algo#2) ability to meet the cost objective.
Figure 4 represents a second example set of scoring results identifying the first cost optimization algorithm's (algo#1) ability to meet the cost objective compared to the second cost optimization algorithm's (algo#2) ability to meet the cost objective.
Figure 5 is example system for hosting inputs, devices, modules, and algorithms (algo#1 and algo#2) for enabling the algorithm optimization system.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

### DETAILED DESCRIPTION

Software Defined Devices (SDDs), such as software defined vehicles (SDVs), are increasingly taking over many consumer and industrial applications. Such SDDs include vehicles (cars, buses, drones, planes, ships, robots, etc.), appliance (e.g. refrigerators, washers, dryers, etc.), industrial machines (e.g. wafer fabrication and packaging lines, equipment assembly lines; testing, etc.), and infrastructure (e.g. vehicle chargers, communications systems, traffic management, utilities, air monitoring, etc.).

SDDs are controlled by one or more algorithms that receive sensor or instruction data and generate a tangible control (e.g. controlling power use, automated driving, resource management, navigation, etc.). The quality, accuracy, efficiency, etc. of a SDD's algorithms directly affects how well such algorithms perform their intended functions. If a SDD's algorithm can be improved, such SDDs can often be updated wirelessly "over the air", which is one of the SDD's great advantages.

Anomalous SDD algorithms, either due to an incomplete design or from unforeseen corner cases can result in danger or harm to individuals, property, and business operations. Identifying such anomalies as soon as possible is an ongoing goal of SDD manufacturers. Currently in order to evaluate how safely an algorithm performs its intended functions, large amounts of data often needs to be downloaded (either wirelessly or via hardwire) to larger network computers which not only delays the algorithm's updates, but also incurs additional transmission and storage costs, especially for a large fleet of vehicles.

Now discussed are various example embodiments of an algorithm optimization system that more quickly identifies algorithm anomalies in a Software Defined Device's (SDD's) control algorithm. The algorithm optimization system in many applications can be implemented as a method, in a system, or in a circuit.

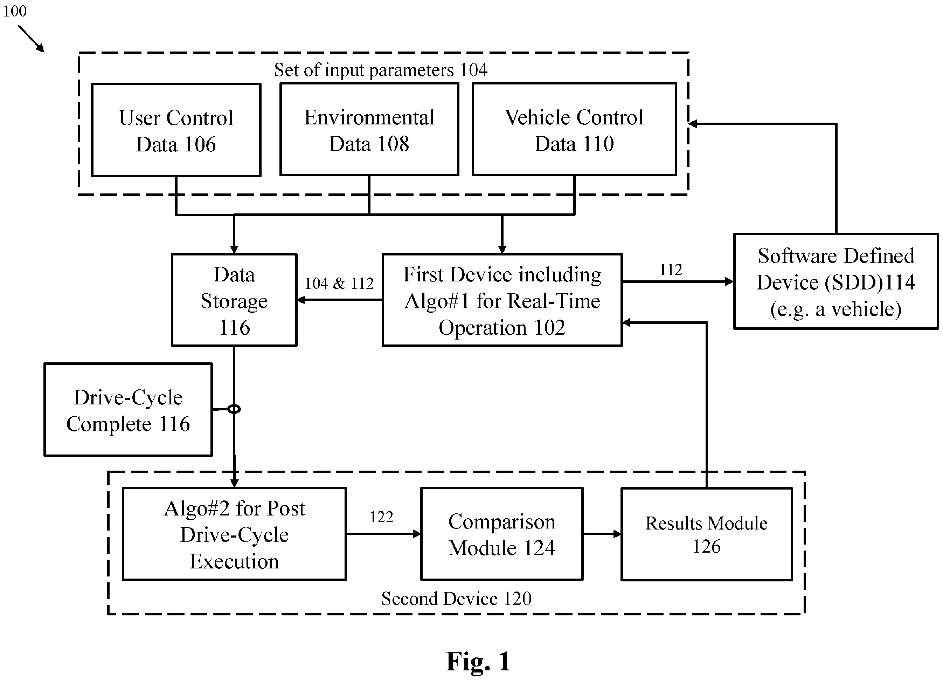

Figure 1 represents a first example 100 of an algorithm optimization system. The algorithm optimization system includes a first device 102 configured to, receive a set of input parameters 104 over a predefined time period (e.g. a vehicle drive-cycle). The predefined time period includes a set of time-steps and the set of input parameters 104 change at each time-step.

The set of input parameters 104 may include user control data 106, environmental data 108, and vehicle control data 110. The user control data 106 can include operator inputs from a driver of a car, a truck, heavy equipment, or an automated/robotic self-driving system. The environmental data 108 can include route information (grade, elevation), temperature, humidity, rain/sleet/snow/ice, GPS location, etc. The vehicle control data 110 include vehicle speed, traction response, battery state of charge, battery voltage / current, etc.

The first device 102 includes a first cost optimization algorithm (algo#1) configured to generate a first set of control outputs 112 sent to a Software Defined Device (SDD) 114 (e.g. a vehicle) that meet a cost objective at each of the time-steps based on each real-time change of the set of input parameters 104. Many of the set of input parameters 104 may be received from the SDD 114.

The first set of control outputs 112 may control various actuators in the SDD 114 (e.g. battery controller, torque controllers, lifts, temperature HVAC controllers, fans, cooling, etc.).

The cost objective may include maximizing an operating range (e.g. miles driven in a SDV), minimizing component wear (e.g. for mean time between failure extension), maximizing a performance envelope, increasing responsiveness (e.g. a set if vehicle driving characteristics), and so on.

The first device 102 stores all of the set of input parameters 104 and the first set of control outputs 112 in a data storage 116.

A drive-cycle complete module 118 determines when the predefined time period ends. The end of the predefined time period will vary depending upon the application; however, for a vehicle example embodiment, completion of the drive-cycle can be determined by: an end of a GPS route selected by the driver (before turning car off); the vehicle (i.e. SDD 114) coming to a garage or parking area and key off event, and/or a pre-determined amount of time in a piecewise method.

At the end (e.g. completion) of a drive-cycle that has been controlled by the first cost optimization algorithm (algo#1), the drive-cycle complete module 118 sends a signal to a second device 120.

In response to the signal from the drive-cycle complete module 118, the second device 120 is configured to, download a complete set of the set of input parameters 104 after the predefined time period has ended and after the set of input parameters 104 have stopped changing.

The second device 120 includes a second cost optimization algorithm (algo#2) configured to generate a second set of control outputs 122 that meet the cost objective at each of the time-steps based mainly or only on the set of input parameters 104. The second device 120 also includes a comparison module 124, and a results module 126.

Unlike the first cost optimization algorithm (algo#1) which only has moment-by-moment real-time data to work with (i.e. the moment-by-moment set of input parameters 104), the second cost optimization algorithm (algo#2) has access to the complete set of input parameters 104 as well as the complete set of first set of control outputs 112 over the entire predefined time period (e.g. entire drive-cycle) as downloaded from the data storage 116.

Given this complete set of information, the second cost optimization algorithm (algo#2) has the capability to select a best possible control action (e.g. stored as one of the second set of control outputs 122) at each and every time-step with the predefined time period (e.g. the drive-cycle). In some example embodiments, the time steps can be100 ms, but could also range from 100s of microseconds to multiple seconds depending on the application.

The second cost optimization algorithm (algo#2) reviews all of the set of input parameters 104 across each timestep in the drive-cycle, and calculates all possible control actions (e.g. stored as one of the second set of control outputs 122) at each time step and selects a best possible outcome. Knowing all route and signal data allows the second cost optimization algorithm (algo#2) to produce a 'best case' second set of control outputs 122 for meeting the cost objective at each of the time-steps (e.g. a best case fuel economy). In some example embodiments, the second cost optimization algorithm (algo#2) can be a dynamic programming algorithm.

Thus the second cost optimization algorithm (algo#2) will be more accurate, efficient, etc. at meeting the cost objective than the first cost optimization algorithm (algo#1), because the second cost optimization algorithm (algo#2) has "full information" over the entire predefined time period, whereas the first cost optimization algorithm (algo#1) only had moment-to-moment (e.g. time-step to time-step) information in real-time.

The comparison module 124 in the second device 120 is configured to compare at each of the time-steps the first set of control outputs 112 from the first optimization algorithm (algo#1) with the second set of control outputs 122 from the second optimization algorithm (algo#2) and identify a set of differences between the first set of control outputs 112 and the second set of control outputs 122.

Since the second set of control outputs 122 will be more accurate, any difference between the first and second control outputs 112, 122 will indicate anomalous programming errors in the first cost optimization algorithm (algo#1).

The results module 126 in the second device 120 re-packages the set of differences identified by the comparison module 124 in a variety of ways depending upon the application. For example, the results module 126 can allow for efficient data collection (e.g. only highlight regions of the drive-cycle where the first cost optimization algorithm's (algo#1) performance is poor).

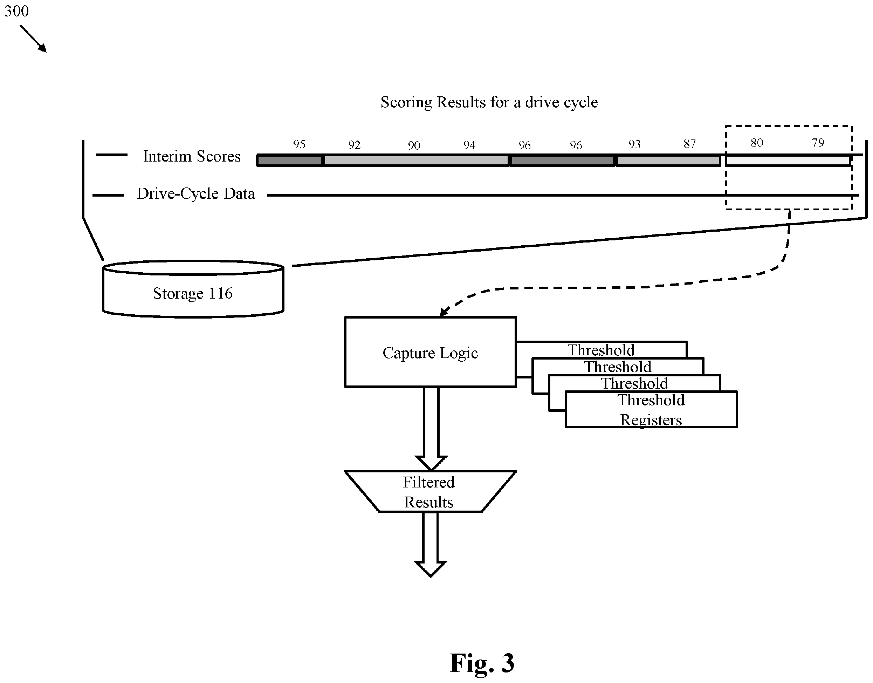

The results module 126 can include a scoring mechanism which scores the first cost optimization algorithm's (algo#1) performance across the entire drive-cycle (see Figure 3). Low scores can then trigger a re-tuning of a set of parameters in the first cost optimization algorithm (algo#1) and/or a re-training the first cost optimization algorithm's (algo#1) neural network.

The results module 126 can also be programmed to upload only low scores to a more powerful optimization algorithm in the cloud. Such scores may also be transmitted to a SDD (e.g. vehicle) fleet operator (e.g. giving information on how well the first cost optimization algorithm (algo#1) meets a fuel/energy economy cost objective for a fleet of vehicles).

In some example embodiments, the algorithm optimization system is embedded in an energy management system (EMS) operating in real-time in one or more of the vehicles, appliances, industrial machines, and infrastructure applications introduced above. The EMS algorithm (i.e. first cost optimization algorithm (algo#1)) may be programmed to optimize a cost objective (e.g. extend a vehicle driving range, reduce energy usage, meet an energy target, minimize battery stress, and so on).

However, by itself the EMS algorithm has inherent inaccuracies, resulting in non-optimal solutions toward meeting a cost objective (e.g. within 5% to 10% of ideal. The second cost optimization algorithm (algo#2) (e.g. a dynamic programming (DP) algorithm) however is capable an optimal solution toward meeting the cost objective that is near 100% accurate, since the second cost optimization algorithm (algo#2) operates after the predetermined time (e.g. drive-cycle) has completed and thus has full knowledge of all of the data collected over the entire predefined time period (e.g. over the entire vehicle drive-cycle). The second cost optimization algorithm (algo#2) in some example embodiments then generates an accuracy, quality, differences, etc. score indicating how well the first cost optimization algorithm (algo#1) met the cost objective and/or identifying difference between the first and second cost optimization algorithms (algo#1 & #2) so that the first cost optimization algorithm (algo#1) can be reprogrammed.

Performing these kinds of calculations in vehicle (e.g. on a algorithm optimization system such as a controller, microcontroller, etc.) allows for cost optimization of the overall system (saves on cloud storage costs, allows for improvements in range optimization, etc.). Furthermore, in-vehicle / in-appliance accuracy assessments allow for real-time results. A configurable time horizon and storage of full route information also allows system developers to see 'hot-spots' where conditions are right for improving the first cost optimization algorithm's (algo#1) performance.

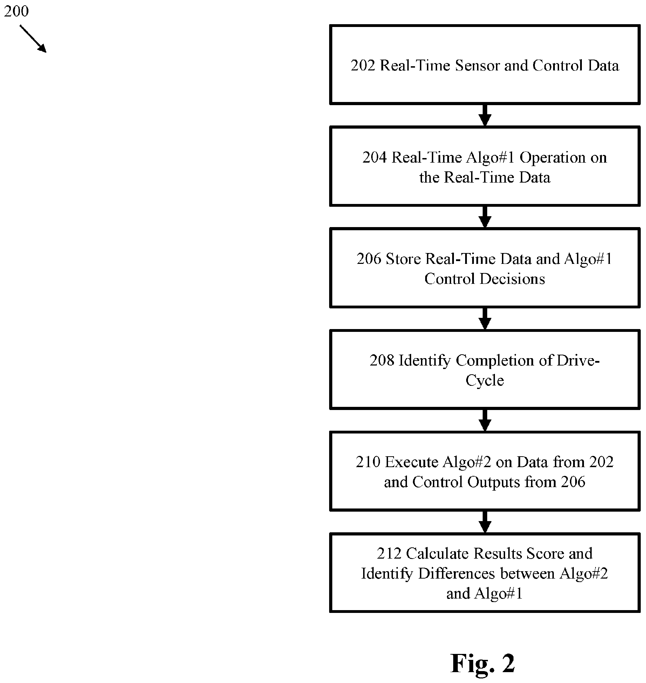

Figure 2 represents a second example 200 of the algorithm optimization system. In 202 the set of input parameters 104 are collected (e.g. driver / operator / robot brain decisions to move the SDD 114 to some desire action. The set of input parameters 104 can also include environment and vehicle / robot states than can be gathered from sensors.

In 204 the first cost optimization algorithm (algo#1) generates a first set of control outputs that meet a cost objective at each of the time-steps based on each change of the set of input parameters. The first cost optimization algorithm's (algo#1) cost objectives can be based on at least one of: cost minimization principles, equivalent consumption minimization strategy, model predictive control, and/or data-driven / machine learning. The cost objectives are determined by a programmer, and are executed by the first cost optimization algorithm (algo#1) at prescribed sample rates, providing optimal actions to achieve the cost objective.

In 206 the data storage 116 is large enough to store the set of input parameters 104 and control actions for the maximum length drive-cycle period.

In 208 the drive-cycle complete module 118 provides a piecewise route / segment complete gating function that holds off the second cost optimization algorithm (algo#2) (e.g. the dynamic programming algorithm) from executing until the predetermined time period (e.g. drive-cycle) has completed. Once the predetermined time period completion is reached, the drive-cycle complete module 118 signals/informs the second cost optimization algorithm (algo#2) to begin executing on the complete set of drive-cycle data.

In 210 the second cost optimization algorithm (algo#2) generates a second set of control outputs that meet the cost objective at each of the time-steps based on the set of input parameters. This is an off-line (i.e. post drive-cycle) algorithm which executes on all of the set of input parameters 104 for the prescribed time duration (full drive-cycle or segment). Once completed, the second cost optimization algorithm (algo#2) stores the second set of control outputs which are a theoretical set of best case control outputs for the SDD 114 than can be achieved given full route / signal knowledge.

In 212 the results module 126 generates quality scores (see Figure 3) for each time-step/segment of the drive-cycle. In various example embodiments, the score is based on ratio of a scaled version of the differences between the first cost optimization algorithm's (algo#1) control signals and the second cost optimization algorithm's (algo#2) control signals times 100%. A score of 95% is considered excellent, and can inform system developers that very little performance can be gained by further tuning the first cost optimization algorithm (algo#1). A score of < 80% informs the system developer that additional gains are possible and the a first cost optimization algorithm (algo#1) can be improved.

Figure 3 represents a first example set of scoring results 300 identifying the first cost optimization algorithm's (algo#1) ability to meet the cost objective compared to the second cost optimization algorithm's (algo#2) ability to meet the cost objective.

As shown, the quality scores generated by the results module 126 for each time-step/segment of the drive-cycle discussed above are shown. Variations in the scores highlight areas of interest (e.g. windows of data) that offer room for improvement and may or may not further need to be pushed to more powerful optimization algorithms in the cloud for engineers to better identify where the weakness of the online algorithm resides.

The scores may include meta-data that provides further insights on circumstances that led to the poor scoring performance (e.g. classification of which user control data 106, environmental data 108, and/or vehicle control data 110 variables had a greatest effect on the low score (e.g. wind, temperature, road grade).

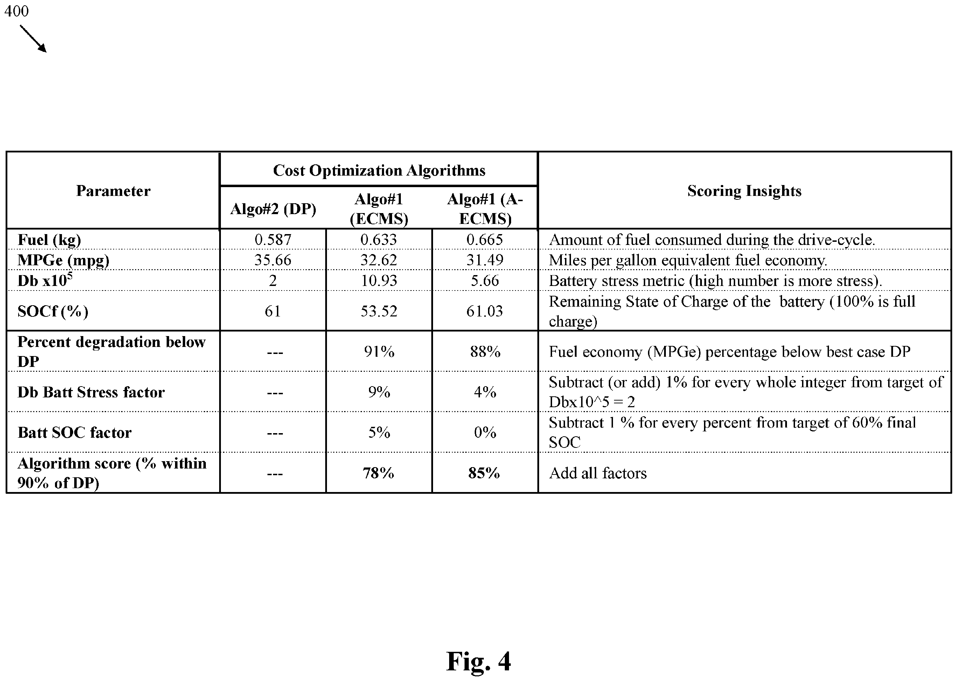

Figure 4 represents a second example set of scoring results 400 identifying the first cost optimization algorithm's (algo#1) ability to meet the cost objective compared to the second cost optimization algorithm's (algo#2) ability to meet the cost objective.

For this example 400 these acronyms are defined as follows: ECMS (Equivalent Consumption Minimization Strategy), A-ECMS (Adaptive Equivalent Consumption Minimization Strategy), MPC (Model Predictive Control), AI/ML (Artificial Intelligence / Machine Learning), DP (Dynamic Programming), and MPGe (miles per gallon of gasoline-equivalent).

MPGe currently applies to hybrid electric and battery electric vehicles. Dbx10^5 represents a battery degradation index, where smaller is better, and is calculated by using a rainfall counter. SOCf(%) represents a final battery State of Charge. For charge sustaining HEV, this number is 60% +/- 1% for this use case.

The second example set of scoring results 400 here are based on the SDD's 114 travel route and vehicle control information collected at each time step. Such route and control data may include: acceleration, deceleration, velocity, ambient temperature, component temperature (can be multiple components), elevation, road grade, battery statistics, etc.

The cost objectives include fuel economy, overall range, kW consumed for electric systems, battery wear, etc.

The first cost optimization algorithms (algo#1) include energy management systems such as ECMS and A-ECMS as shown, but could alternatively have been MPC, AI/ML informed MPC, or a full AI/ML algorithm.

The second cost optimization algorithm (algo#2) is a dynamic programming (DP) algorithm, having full route and vehicle knowledge collected during the complete drive-cycle, and thus has an ability to provide a best case fuel economy for the SDD 114.

At the end of the drive-cycle, a rating is calculated by taking (MPGe_{DP} - MPGe_{Control A}) / MPGe_{DP} * 100%.

Typically, a score of 95% or better means further optimization of the first cost optimization algorithm (algo#1) operation won't result in much better performance. However, if a score of 85% or less is detected, then the vehicle manufacturer, fleet operator, control system engineer, knows that the first cost optimization algorithm (algo#1) is not achieving an optimal performance and an optimization opportunity exists.

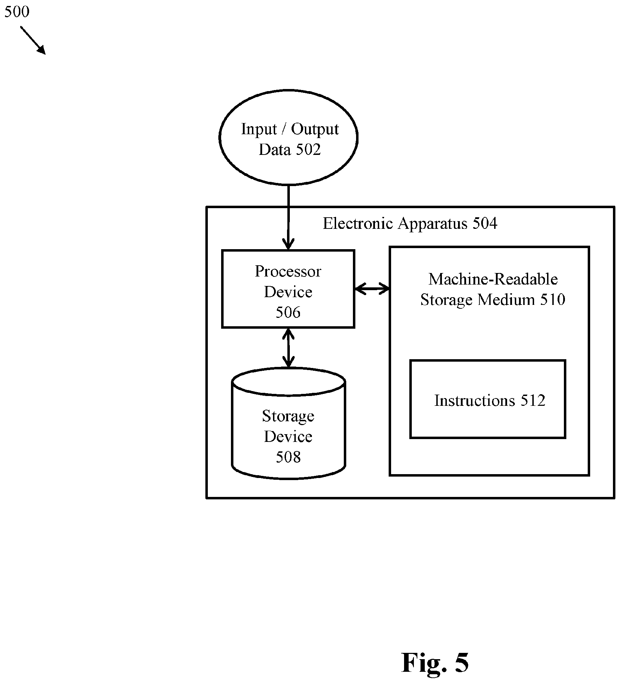

Figure 5 is example system 500 for hosting inputs, devices, modules, and algorithms (algo#1 and algo#2) for enabling the algorithm optimization system 100 as discussed in Figure 1.

The system 500 shows an input/output data 502 interface with an electronic apparatus 504. The electronic apparatus 504 includes a processor 506, a storage device 508, and a non-transitory machine-readable storage medium 510. The machine-readable storage medium 510 includes instructions 512 which control how the processor 506 receives input data 502 and transforms the input data into output data 502, using data within the storage device 508. Example instructions 512 stored in the machine-readable storage medium 510 are discussed elsewhere in this specification. The machine-readable storage medium in an alternate example embodiment is a non-transitory computer-readable storage medium.

In various example embodiments operational aspects of the algorithm optimization system 100 described above may be implemented as either functional or software instructions, as logic gates, within application specific chips (SoC), firmware, as well as in other hardware forms.

One example discloses a first cost optimization algorithm (algo#1) configured to generate a first set of control outputs that meet a cost objective at each of the time-steps based on each change of the set of input parameters; a second cost optimization algorithm (algo#2) configured to generate a second set of control outputs that meet the cost objective at each of the time-steps based on the set of input parameters; wherein the second device is configured to compare at each of the time-steps the first set of control outputs from the first optimization algorithm (algo#1) with the second set of control outputs from the second optimization algorithm (algo#2); and wherein the second device is configured to identify a set of differences between the first set of control outputs and the second set of control outputs.

It will be readily understood that the components of the embodiments as generally described herein and illustrated in the appended figures could be arranged and designed in a wide variety of different configurations. Thus, the detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

As used herein, "predefined" is equivalent to "predetermined" and indicates a value or setting that is tuned for a particular application/embodiment/instance of the described and/or claimed subject matter.

## Claims

1. An algorithm optimization system, comprising:
a first device configured to, receive a set of input parameters over a predefined time period;
wherein the predefined time period includes a set of time-steps and the set of input parameters change at each time-step;
wherein the first device includes a first cost optimization algorithm (algo#1) configured to generate a first set of control outputs that meet a cost objective at each of the time-steps based on each change of the set of input parameters;
a second device configured to, receive the set of input parameters after the predefined time period has ended and the set of input parameters have stopped changing;
wherein the second device includes a second cost optimization algorithm (algo#2) configured to generate a second set of control outputs that meet the cost objective at each of the time-steps based on the set of input parameters;
wherein the second device is configured to compare at each of the time-steps the first set of control outputs from the first optimization algorithm (algo#1) with the second set of control outputs from the second optimization algorithm (algo#2); and
wherein the second device is configured to identify a set of differences between the first set of control outputs and the second set of control outputs.

2. The system of any preceding claim :
wherein the first device is configured to re-tune the first cost optimization algorithm (algo#1) based on the differences identified by the second cost optimization algorithm (algo#2).

3. The system of any preceding claim:
wherein the first device is configured to replace the first cost optimization algorithm (algo#1) with the second cost optimization algorithm (algo#2).

4. The system of any preceding claim:
wherein the second cost optimization algorithm (algo#2) performs optimization only after the first cost optimization algorithm (algo#1) has stopped receiving data.

5. The system of any preceding claim:
further comprising a set of sensors configured to collect the set of input parameters.

6. The system of any preceding claim:
wherein the first cost optimization algorithm (algo#1) sequentially generates each control output in the first set of control outputs at each of the time steps as each input parameter in the set of input parameters is received.

7. The system of any preceding claim:
wherein the second cost optimization algorithm (algo#2) generates each control output in the second set of control outputs at each of the set of time steps after a complete set of the set of input parameters has been received.

8. The system of any preceding claim:
wherein the first cost optimization algorithm (algo#1) operates forward in time as each input parameter in the set of input parameters is received.

9. The system of any preceding claim:
wherein the second cost optimization algorithm (algo#2) operates backward in time after each input parameter in the set of input parameters has already been received.

10. The system of any preceding claim:
wherein the set of differences indicate an accuracy of the first cost optimization algorithm (algo#1).

11. The system of any preceding claim:
wherein the set of differences indicate a set of unknown events where the first cost optimization algorithm (algo#1) lacks a corresponding set of control actions.

12. The system of any preceding claim:
wherein the set of differences indicate portions of the first optimization algorithm (algo#1) that fall below a predefined quality metric.

13. The system of any preceding claim:
wherein the algorithm optimization system is a vehicle; and
wherein the predefined time period is a complete drive-cycle of the vehicle.

14. The system of claim 13:
wherein the first device is configured to re-tune a set of parameters in the first cost optimization algorithm (algo#1) based on the differences identified by the second cost optimization algorithm (algo#2) each time the complete drive-cycle is completed.

15. The system of any preceding claim:
wherein the first and second cost optimization algorithms (algo#1&2) are energy management system (EMS) algorithms.
